# EUROPÄISCHE PATENTSCHRIFT

(11) **EP 3 702 737 B1**
(45) Veröffentlichungstag und Bekanntmachung des Hinweises auf die Patenterteilung: **12.05.2021**
(21) Anmeldenummer: 19160261.4
(22) Anmeldetag: 01.03.2019
(51) Int. Cl.: G01D 5/20, G01D 11/24

(54) **ABTASTEINHEIT ZUR ABTASTUNG EINER WINKELSKALA SOWIE WINKELMESSEINRICHTUNG MIT DIESER ABTASTEINHEIT**
SCANNING UNIT FOR SCANNING AN ANGLE SCALE AND ANGLE MEASURING DEVICE WITH SUCH A SCANNING UNIT
UNITÉ DE BALAYAGE PERMETTANT DE BALAYER UNE ÉCHELLE D'ANGLE AINSI QUE DISPOSITIF DE MESURE D'ANGLE DOTÉ D'UNE TELLE UNITÉ DE BALAYAGE

(43) Veröffentlichungstag der Anmeldung: 02.09.2020
(73) Patentinhaber: Dr. Johannes Heidenhain GmbH, 83301 Traunreut (DE)
(72) Erfinder: EDER, Peter, 83278 Traunstein (DE)

(56) Entgegenhaltungen:
- EP-A1- 3 355 032
- DE-A1- 10 225 013
- DE-B4-102007 063 683

## Beschreibung

### GEBIET DER TECHNIK

Winkelmesseinrichtungen werden beispielsweise in Drehgebern zur Bestimmung der Winkelstellung zweier relativ zueinander drehbarer Maschinenteile verwendet.

Bei Abtasteinheiten von induktiven Winkelmesseinrichtungen werden häufig Erregerwindungen und Empfängerwindungen in Form von Leiterbahnen auf einem gemeinsamen Substrat, etwa einer Leiterplatte aufgebracht, das beispielsweise mit einem Stator eines Drehgebers fest verbunden ist. Diesem Substrat gegenüber liegend befindet sich ein weiteres Bauelement, auf der als Winkelskala in periodischen Abständen elektrisch leitende Flächen als Teilungsstruktur aufgebracht sind und welche mit dem Rotor des Drehgebers drehfest verbunden ist. Wenn an den Erregerwindungen ein elektrisches Erregerfeld angelegt wird, werden in den Empfängerwindungen beziehungsweise -spulen während der Relativdrehung zwischen Rotor und Stator von der Winkelstellung abhängige Signale erzeugt. Diese Signale werden dann in einer Auswerteelektronik weiterverarbeitet.

Prinzipiell wird zwischen Winkelmesseinrichtungen mit Eigenlagerung und Winkelmesseinrichtungen ohne Eigenlagerung, im Folgenden als lagerlose Winkelmesseinrichtungen bezeichnet, unterschieden. Winkelmesseinrichtungen mit Eigenlagerung weisen üblicherweise vergleichsweise kleine Wälzlager auf, so dass die relativ zueinander drehbaren Bauteilgruppen, insbesondere die Abtasteinheit und die Winkelskala innerhalb der betreffenden Winkelmesseinrichtung in definierter axialer und radialer Position relativ zueinander angeordnet sind. Dagegen muss bei den lagerlosen Winkelmesseinrichtungen bei der Montage an einer Maschine beispielsweise an einem (Elektro-) Motor, darauf geachtet werden, dass die zueinander drehbaren Bauteilgruppen in der richtigen Position insbesondere im korrekten axialen Abstand zueinanderfestgelegt werden. Die betreffenden Maschinen beziehungsweise Motoren erzeugen im Betrieb nicht selten Wärme, so dass es vorteilhaft ist, wenn die Winkelmesseinrichtung insbesondere die Abtasteinheit so aufgebaut ist, dass deren Komponenten nicht übermäßigen Temperaturen ausgesetzt sind.

### STAND DER TECHNIK

In der EP 3 355 032 A1 ist eine Winkelmesseinrichtung beschrieben, welche ein tragendes Substrat aufweist, wobei die Auswerteelektronik der Detektorsignale auf der den Detektoren gegenüber liegenden Seite des Substrats angeordnet ist.

### ZUSAMMENFASSUNG DER ERFINDUNG

Der Erfindung liegt die Aufgabe zugrunde eine Abtasteinheit zu schaffen, die wirtschaftlich herstellbar ist und bezüglich ihres Anbaus Vorteile aufweist.

Diese Aufgabe wird erfindungsgemäß durch die Merkmale des Anspruches 1 gelöst.

Die Erfindung umfasst demnach eine Abtasteinheit für eine Winkelmesseinrichtung zur Abtastung einer Winkelskala, so dass um eine Drehachse eine relative Winkelstellung zwischen der Abtasteinheit und der Winkelskala bestimmbar ist. Die Abtasteinheit umfasst ein Substrat, das eine erste Oberfläche aufweist. Zudem umfasst die Abtasteinheit zumindest einen Detektor, der geeignet ist Signale, die von der Winkelstellung abhängig sind, zu erzeugen. Außerdem umfasst die Abtasteinheit eine Auswerteelektronik, die mehrere elektronische Bauelemente umfasst, die zur Auswertung der Signale mit dem zumindest einen Detektor elektrisch verbunden ist. Elektronische Bauelemente der Auswerteelektronik sind zudem von einer Vergussmasse umgeben. Weiterhin umfasst die Abtasteinheit eine elektrische Schnittstelle zur Herstellung einer Verbindung von der Auswerteelektronik zu einer Folgeelektronik. Der zumindest eine Detektor, die elektronischen Bauelemente und die elektrische Schnittstelle sind an der ersten Oberfläche des Substrats angeordnet. Die elektronischen Bauelemente und die elektrische Schnittstelle sind so angeordnet, dass diese von der Drehachse weiter entfernt platziert sind als der zumindest eine Detektor. Die Vergussmasse ist bezüglich der Drehachse umlaufend auf der ersten Oberfläche des Substrats angeordnet, so dass insbesondere die elektronischen Bauelemente und die elektrische Schnittstelle bezüglich der Vergussmasse axial innen liegend angeordnet sind.

Winkelabhängige Signale sind insbesondere Signale, welche eine Information über die relative Winkelstellung zwischen der Winkelskala und der Abtasteinheit beinhalten.

Unter dem Begriff elektrische Schnittstelle ist eine elektrisch leitende Verbindungen zwischen mehreren leitenden Gliedern mit direktem Kontakt, das heißt die sich gegenseitig berühren. Dies kann beispielsweise eine elektrische Kupplungsvorrichtung, etwa eine Steckvorrichtung oder eine Kabeldirektanbindung sein.

Durch die Formulierung wonach die Vergussmasse bezüglich der Drehachse umlaufend angeordnet ist, soll im Folgenden zum Ausdruck gebracht werden, dass die Vergussmasse beispielsweise geschlossen um 360° um die Achse herum umlaufend angeordnet ist. Ebenso kann diese Formulierung auch eine offene Anordnung der Vergussmasse gemäß eines umlaufenden Segmentes bedeuten, so dass dann die Vergussmasse etwa um 270°, 180° oder 120° um die Achse herum umlaufend angeordnet ist. Ebenso umfasst die Formulierung Anordnungen, bei denen die Vergussmasse um 360° mit Unterbrechungen um die Achse herum umlaufend angeordnet ist.

Die Vergussmasse ist insbesondere ringförmig beziehungsweise kreisringförmig ausgestaltet, beispielsweise als geschlossener oder offener beziehungsweise unterbrochener Ring, bestehend aus einem Ringsegment oder mehreren Ringsegmenten.

Mit Vorteil weist das Substrat eine Stärke von mindestens 0,5 mm auf. Insbesondere kann das Substrat nicht nur als Träger des Detektors, der Auswerteelektronik und der Schnittstelle dienen sondern auch als ein mechanisch tragendes Element ausgebildet sein. Insbesondere unter diesem Aspekt kann das Substrat eine Metallschicht aufweisen, die eine Dicke von mindestens 0,5 mm hat, so dass die Metallschicht als tragendes Element dient. Gleichzeitig kann ein derart ausgestaltetes Substrat vergleichsweise gut Wärme, insbesondere aus dem Bereich der Auswerteelektronik, ableiten.

Vorteilhafterweise ist das Substrat eben ausgestaltet, also nicht gekrümmt.

In weiterer Ausgestaltung der Erfindung weist das Substrat eine zweite Oberfläche auf, die der ersten Oberfläche gegenüber liegend angeordnet ist, wobei an der zweiten Oberfläche keine elektronischen Bauelemente angeordnet sind und / oder keine Schnittstelle und / oder kein Detektor. Insbesondere kann die zweite Oberfläche eine im Wesentlichen ebene oder im Wesentlichen glatte Fläche sein. Beispielsweise kann die zweite Oberfläche des Substrats gleichzeitig als Gehäuseteil beziehungsweise Teil einer Gehäuseaußenfläche eines Motors dienen.

Vorteilhaft ist die Abtasteinheit so ausgestaltet, dass diese nach einem induktiven Prinzip arbeitet. Insbesondere dann ist der Detektor als zumindest eine Empfängerwindung ausgestaltet.

In weiterer Ausgestaltung der Erfindung weist die Abtasteinheit zumindest eine Erregerwindung auf, die an der ersten Oberfläche des Substrats angeordnet ist.

Mit Vorteil weist das Substrat zumindest ein Befestigungselement auf, das radial außerhalb eines Dichtungselementes angeordnet ist. Beispielsweise kann das Befestigungselement als eine Bohrung oder ein Clip ausgestaltet sein. Das Dichtungselement kann beispielsweise ein O-Ring sein oder eine Dichtschnur, die zum Beispiel auf dem Substrat aufvulkanisiert ist.

Vorteilhaft weist das Substrat einen Randbereich auf, der radial außerhalb der Vergussmasse verläuft. Insbesondere kann der Randbereich ohne Unterbrechung umlaufend um die Vergussmasse verlaufen, so dass radial außerhalb der gesamten Vergussmasse ein Randstreifen des Substarts vorliegt. Insbesondere kann das Substrat zumindest ein Befestigungselement aufweisen, das im Randbereich angeordnet ist.

Gemäß einem weiteren Aspekt umfasst die Erfindung eine Winkelmesseinrichtung mit der Abtasteinheit und einer Winkelskala, wobei die Winkelskala relativ zur Abtasteinheit um die Drehachse drehbar angeordnet ist und eine relative Winkelstellung zwischen der Abtasteinheit und der Winkelskala bestimmbar ist. Dabei ist die Abtasteinheit mit einem axialen Versatz relativ zur Winkelskala angeordnet.

Mit Vorteil ist die Winkelskala radial innerhalb der Vergussmasse angeordnet. Insbesondere ist der axiale Versatz im Verhältnis zur axialen Ausdehnung der Vergussmasse so klein, dass radial außerhalb der Winkelskala die Vergussmasse angeordnet ist. Die Winkelskala taucht also axial in das (Luft-) Volumen ein, das von der Vergussmasse umlaufend umgeben ist.

Gemäß einer weiteren Ausgestaltung der Erfindung ist die Winkelmesseinrichtung als eine induktive Winkelmesseinrichtung ausgebildet.

In weiterer Ausgestaltung der Erfindung weist die Winkelskala in periodischen Abständen elektrisch leitende Flächen als Teilungsstruktur auf.

Mit Vorteil ist die Winkelskala aus elektrisch leitfähigem Material hergestellt, das in periodischen Abständen Erhebungen und Vertiefungen als Teilungsstruktur aufweist. Diese Anordnungen können insbesondere dann zur Verwendung gelangen, wenn die Abtasteinheit nach einem induktiven Prinzip arbeitet.

Vorteilhaft ist die Winkelmesseinrichtung lagerlos ausgestaltet.

Häufig ist eine induktive Winkelmesseinrichtung so ausgestaltet, dass die Winkelskala durch die Abtasteinheit beziehungsweise durch die Empfängerwindungen über einen großen Teil ihres Umfangs abtastbar ist und so winkelabhängige Signale erzeugbar sind. Alternativ kann die Winkelmesseinrichtung so ausgestaltet sein, dass die Winkelskala durch mehrere über den Umfang verteilte Abtaststellen abgetastet wird.

Vorteilhafte Ausbildungen der Erfindung entnimmt man den abhängigen Ansprüchen.

Weitere Einzelheiten und Vorteile der erfindungsgemäßen Abtasteinheit ergeben sich aus der nachfolgenden Beschreibung eines Ausführungsbeispiels anhand der beiliegenden Figuren.

### KURZE BESCHREIBUNG DER ZEICHNUNGEN

Es zeigen die
- Figur 1: eine Draufsicht auf eine Abtasteinheit
- Figur 2: eine Detailansicht der Abtasteinheit,
- Figur 3: eine Schnittdarstellung der Abtasteinheit,
- Figur 4: eine Schnittdarstellung einer Winkelmesseinrichtung mit der Abtasteinheit,
- Figur 5: eine Draufsicht auf die Winkelmesseinrichtung.

### BESCHREIBUNG DER AUSFÜHRUNGSFORMEN

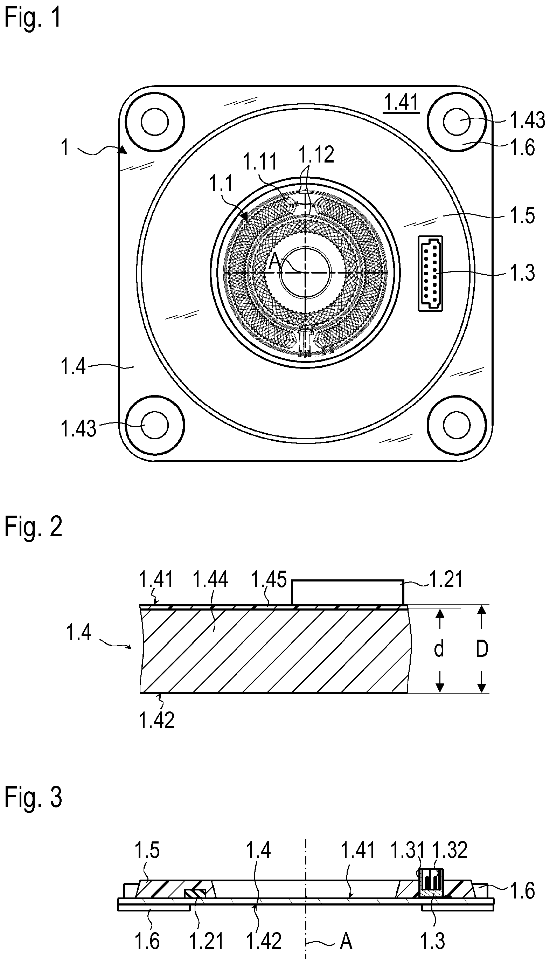

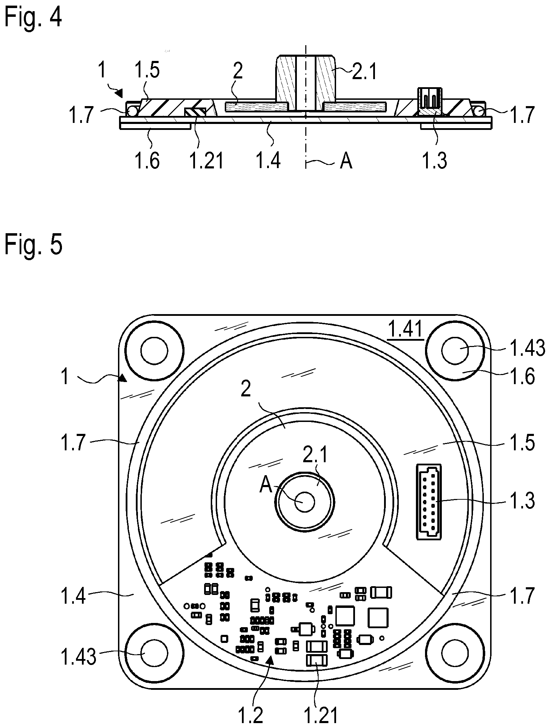

In den Figuren ist ein Ausführungsbeispiel für eine Abtasteinheit 1, die in einer Winkelmesseinrichtung zur Abtastung einer Winkelskala 2 (siehe etwa die Figur 4) gezeigt, wobei durch die Winkelmesseinrichtung eine relative Winkelstellung um eine Drehachse A zwischen der Abtasteinheit 1 und der Winkelskala 2 bestimmt werden kann. Die Abtasteinheit umfasst demnach unter anderem ein Substrat 1.4, welches (siehe die Figur 2) naturgemäß eine erste Oberfläche 1.41 und eine der ersten Oberfläche 1.41 gegenüber liegende zweite Oberfläche 1.42 aufweist. Das im vorgestellten Ausführungsbeispiel im Wesentlichen ebene und quadratische Substrat 1.4 weist zudem eine vergleichsweise massive Metallschicht 1.44 auf, die hier eine Dicke d von 1,0 mm aufweist. Auf dieser Metallschicht 1.44 befindet sich eine elektrisch isolierende beziehungsweise dielektrische Schicht 1.45, die beispielsweise als eine Polyimid-Schicht etwa als Lack oder Folie ausgebildet ist. Die dielektrische Schicht 1.45 ist im Verhältnis zur Metallschicht 1.44 dünn und hat im vorgestellten Ausführungsbeispiel eine Dicke von 20 µm. Dementsprechend beträgt die Stärke D des Substrats 1 hier 1,02 mm. Auf der dielektrischen Schicht 1.45 werden Leiterbahnen hergestellt.

Im vorgestellten Ausführungsbeispiel beruht die Abtasteinheit 1 auf einem induktiven Messprinzip. Demgemäß ist der Detektor 1.1, der an der ersten Oberfläche 1.41 angeordnet ist, als mehrere Empfängerwindungen 1.11 ausgestaltet. Zudem sind an der ersten Oberfläche 1.41 mehrere Erregerwindungen 1.12 angeordnet. Im vorgestellten Ausführungsbeispiel sind die Empfängerwindungen 1.11 und die Erregerwindungen 1.12 im wesentlich konzentrisch um die Drehachse A angeordnet.

Die vom Detektor 1.1 erzeugbaren Signale können über die Leiterbahnen übertragen in einer Auswerteelektronik 1.2 weiterverarbeitet werden. In der Figur 5 sind beispielsweise elektronische Bauelemente 1.21 der Auswerteelektronik 1.2 dargestellt, die in einem ringförmigen Bereich auf dem Substrat 1.4 montiert sind. Weiterhin ist auf dem Substrat 1.4 eine Schnittstelle 1.3 montiert, die hier als Steckverbinder beziehungsweise elektrisches Kupplungsteil ausgebildet ist und insbesondere einen Kontaktträger 1.31, der mehrere elektrische Kontakte 1.32 umschließt aufweist (Figur 3). Somit ist an die Schnittstelle 1.3 ein Verbindungskabel zu einer Folgeelektronik anschließbar.

Sowohl die elektronischen Bauelemente 1.21 der Auswerteelektronik 1.2 als auch die Schnittstelle 1.3 beziehungsweise der Kontaktträger 1.31 werden nach der Montage auf dem Substrat 1.4 vergossen, wobei eine ringförmige Vergussmasse 1.5 gemäß der Figur 1 entsteht. In der Figur 5 ist zur Darstellung der elektronischen Bauelemente 1.21 der Auswerteelektronik 1.2 die ringförmige Vergussmasse 1.5 in einem Segment aufgebrochen dargestellt. Im vorgestellten Ausführungsbeispiel befinden sich innerhalb des Volumens der Vergussmasse 1.5 im in der Darstellung nicht aufgebrochenen Bereich weitere elektronische Bauelemente 1.21 der Auswerteelektronik 1.2. Die Vergussmasse 1.5 ist also bezüglich der Drehachse A umlaufend auf der ersten Oberfläche 1.41 des Substrats 1.4 angeordnet. Der innere Rand der Vergussmasse 1.5 und der äußere Rand der Vergussmasse 1.5 sind abgeschrägt ausgeführt, wobei der äußere Rand der Vergussmasse 1.5 eine radiale Abstützung für ein Dichtungselement 1.7 bildet. Im vorgestellten Ausführungsbeispiel ist das Dichtungselement 1.7 als ein O-Ring ausgestaltet. Das Dichtungselement 1.7 stützt sich radial gegen die Vergussmasse 1.5 ab (Figur 4). Alternativ kann der äußere Rand der Vergussmasse auch einen Hinterschnitt aufweisen, so dass der O-Ring in diesem Hinterschnitt insbesondere axial gehalten wird.

Die Winkelmesseinrichtung umfasst die Abtasteinheit 1 und eine Winkelskala 2, wobei die Abtasteinheit 1 und die Winkelskala 2 relativ zueinander um eine Drehachse A drehbar angeordnet sind. Zur Erreichung der relativen Drehbarkeit ist bei der vorliegenden Winkelmesseinrichtung keine Eigenlagerung, also kein Wälzlager oder Gleitlager, vorgesehen (lagerlose Winkelmesseinrichtung). Vielmehr wird die Abtasteinheit 1 an einem ersten Maschinenteil befestigt und die Winkelskala 2 an einem zweiten Maschinenteil. Dabei ist das erste Maschinenteil relativ zum zweiten Maschinenteil drehbar angeordnet. Die Abtasteinheit 1 und die Winkelskala 2 liegen mit einem Luftspalt getrennt einander gegenüber.

Die Abtasteinheit 1 kann mit Hilfe von Bohrungen 1.43, in welchen Einsätze 1.6 fixiert sind, am ersten Maschinenteil befestigt werden, beispielsweise durch eine Schraubverbindung. Das erste Maschinenteil kann insbesondere ein Gehäuse eines Motors sein. Das Substrat 1.4 beziehungsweise die Metallschicht 1.44 dient als tragendes Element und kann beispielsweise gleichzeitig als Deckel für das Gehäuse des Motors fungieren. Da an der zweiten Oberfläche 1.42 weder elektronische Bauelemente noch eine Schnittstelle oder ein Detektor angeordnet sind eignet sich die zweite Oberfläche 1.42 als ein Teil der Außenfläche des Motors.

Das Gehäuse des Motors kann eine umlaufende Wandung aufweisen, gegen die das Dichtungselement 1.7 drückt.

An der Winkelskala 2 der Winkelmesseinrichtung ist eine Welle 2.1 drehfest befestigt zur starren und drehfesten Befestigung etwa an einer Maschinen- oder Motorwelle. Die Winkelskala 2 besteht aus einer ringförmigen Leiterplatte, auf der in periodischer Abfolge und in gleichen Teilungsschritten leitende und nicht leitende Bereiche, also Bereiche unterschiedlicher elektrischer Leitfähigkeit vorgesehen sind. Häufig kann die Winkelskala 2 mit der Welle 2.1 auch als Rotor bezeichnet werden.

Durch die Erregerwindungen 1.12 auf der Abtasteinheit 1 wird im Betrieb der Winkelmesseinrichtung ein homogenes Wechselfeld erzeugt, das durch die Winkelskala 2 abhängig von der Winkelstellung, beziehungsweise vom Drehwinkel der Welle 2.1 moduliert wird. In den Empfängerwindungen 1.11, die sich ebenfalls auf der Abtasteinheit 1 befinden, werden durch das modulierte elektromagnetische Feld winkelabhängige Signale erzeugt.

Im vorgestellten Ausführungsbeispiel ist die Winkelmesseinrichtung gemäß einer so genannten Rundumabtastung konfiguriert. Das heißt insbesondere, dass die Abtasteinheit 1 so ausgestaltet ist, dass die Winkelskala 2 durch die Abtasteinheit 1 beziehungsweise durch die Empfängerwindungen 1.11 über nahezu den gesamten Umfang abtastbar ist und so winkelabhängige Signale erzeugbar sind. Es wird also nahezu die komplette Teilungsstruktur der Winkelskala 2 zur Gewinnung eines Signals, welches die Information der relativen Winkelstellung beinhaltet, von der Abtasteinheit 1 abgetastet.

Die so erzeugten Signale werden dann der Auswerteelektronik 1.2 zugeführt, wo sie weiterverarbeitet werden. In einer Reglereinheit werden die Signale dahingehend geregelt, dass diese stets gleich bleibende Signalamplituden beziehungsweise Pegel aufweisen.

In der Auswerteelektronik 1.2 wird die Winkelstellung beziehungsweise die Positionswerte der Winkelskala 2 auf Basis der Signale bestimmt. Ferner werden der Folgeelektronik die Winkelstellung und die Drehzahl der Winkelskala 2 zur weiteren elektronischen Verarbeitung weitergeleitet.

## Patentansprüche

1. Abtasteinheit (1) für eine Winkelmesseinrichtung zur Abtastung einer Winkelskala (2), so dass um eine Drehachse (A) eine relative Winkelstellung zwischen der Abtasteinheit (1) und der Winkelskala (2) bestimmbar ist, wobei die Abtasteinheit (1)
- ein Substrat (1.4), das eine erste Oberfläche (1.41) aufweist,
- zumindest einen Detektor (1.1) zur Erzeugung von Signalen, die von der Winkelstellung abhängig sind,
- eine Auswerteelektronik (1.2), die mehrere elektronische Bauelemente (1.21) umfasst, wobei elektronische Bauelemente (1.21) der Auswerteelektronik (1.2) von einer Vergussmasse (1.5) umgeben sind,
- eine elektrische Schnittstelle (1.3) zur Herstellung einer Verbindung von der Auswerteelektronik (1.2) zu einer Folgeelektronik, umfasst, wobei
der zumindest eine Detektor (1.1), die elektronischen Bauelemente (1.21) und die elektrische Schnittstelle (1.3) an der ersten Oberfläche (1.41) des Substrats (1.4) angeordnet sind, wobei
die elektronischen Bauelemente (1.21) und die elektrische Schnittstelle (1.3) so angeordnet sind, dass diese von der Drehachse (A) weiter entfernt platziert sind als der zumindest eine Detektor (1.1), und
die Vergussmasse (1.5) bezüglich der Drehachse (A) umlaufend auf der ersten Oberfläche (1.41) des Substrats (1.4) angeordnet ist.

2. Abtasteinheit (1) gemäß dem Anspruch 1, wobei das Substrat (1.4) eine Stärke (D) von mindestens 0,5 mm aufweist.

3. Abtasteinheit (1) gemäß dem Anspruch 2, wobei das Substrat (1.4) eine Metallschicht (1.44) aufweist, wobei die Metallschicht (1.44) eine Dicke (d) von mindestens 0,5 mm aufweist.

4. Abtasteinheit (1) gemäß einem der vorhergehenden Ansprüche, wobei das Substrat (1.4) eine zweite Oberfläche (1.42) aufweist, die der ersten Oberfläche (1.41) gegenüber liegend angeordnet ist, wobei an der zweiten Oberfläche (1.42) keine elektronischen Bauelemente (1.21) angeordnet sind.

5. Abtasteinheit (1) gemäß einem der vorhergehenden Ansprüche, wobei der Detektor (1.1) als zumindest eine Empfängerwindung (1.11) ausgestaltet ist.

6. Abtasteinheit (1) gemäß dem Anspruch 5, wobei die Abtasteinheit (1) zumindest eine Erregerwindung (1.12) aufweist, die an der ersten Oberfläche (1.41) des Substrats (1.4) angeordnet ist.

7. Abtasteinheit (1) gemäß einem der vorhergehenden Ansprüche, wobei das Substrat (1.4) zumindest ein Befestigungselement (1.43) aufweist, das radial außerhalb eines Dichtungselementes (1.7) angeordnet ist.

8. Abtasteinheit (1) gemäß einem der vorhergehenden Ansprüche, wobei das Substrat (1.4) einen Randbereich aufweist, der radial außerhalb der Vergussmasse (1.5) verläuft.

9. Abtasteinheit (1) gemäß dem Anspruch 8, wobei das Substrat (1.4) zumindest ein Befestigungselement (1.43) aufweist, das im Randbereich angeordnet ist.

10. Winkelmesseinrichtung mit einer Abtasteinheit (1) gemäß dem Anspruch 1 und einer Winkelskala (2), wobei die Winkelskala (2) relativ zur Abtasteinheit (1) um eine Drehachse (A) drehbar angeordnet ist und eine relative Winkelstellung zwischen der Abtasteinheit (1) und der Winkelskala (2) bestimmbar ist, wobei die Abtasteinheit (1) mit einem axialen Versatz relativ zur Winkelskala (2) angeordnet ist.

11. Winkelmesseinrichtung gemäß dem Anspruch 10, wobei die Winkelskala (2) radial innerhalb der Vergussmasse (1.5) angeordnet ist.

12. Winkelmesseinrichtung gemäß dem Anspruch 10 oder 11, wobei die Winkelmesseinrichtung als eine induktive Winkelmesseinrichtung ausgebildet ist.

13. Winkelmesseinrichtung gemäß einem der Ansprüche 10 bis 12, wobei die Winkelskala (2) in periodischen Abständen elektrisch leitende Flächen als Teilungsstruktur aufweist.

14. Winkelmesseinrichtung gemäß einem der Ansprüche 10 bis 13, wobei die Winkelskala (2) aus elektrisch leitfähigem Material hergestellt ist und in periodischen Abständen Erhebungen und Vertiefungen als Teilungsstruktur aufweist.

15. Winkelmesseinrichtung gemäß einem der Ansprüche 10 bis 14, wobei die Winkelmesseinrichtung lagerlos ausgestaltet ist.

## Claims

1. Scanning unit (1) for an angle measuring device for scanning an angular scale (2), so that a relative angular position between the scanning unit (1) and the angular scale (2) about an axis of rotation (A) can be determined, wherein the scanning unit (1) comprises
- a substrate (1.4) which has a first surface (1.41),
- at least one detector (1.1) for generating signals which depend on the angular position,
- evaluation electronics (1.2) which comprise a plurality of electronic components (1.21), wherein the electronic components (1.21) of the evaluation electronics (1.2) are surrounded by a potting compound (1.5),
- an electrical interface (1.3) for producing a connection from the evaluation electronics (1.2) to subsequent electronics, wherein
the at least one detector (1.1), the electronic components (1.21) and the electrical interface (1.3) are arranged on the first surface (1.41) of the substrate (1.4), wherein
the electronic components (1.21) and the electrical interface (1.3) are arranged such that these are placed further away from the axis of rotation (A) than the at least one detector (1.1), and
the potting compound (1.5) is arranged on the first surface (1.41) of the substrate (1.4) circumferentially with respect to the axis of rotation (A).

2. Scanning unit (1) according to Claim 1, wherein the substrate (1.4) has a thickness (D) of at least 0.5 mm.

3. Scanning unit (1) according to Claim 2, wherein the substrate (1.4) has a metal layer (1.44), wherein the metal layer (1.44) has a thickness (d) of at least 0.5 mm.

4. Scanning unit (1) according to one of the preceding claims, wherein the substrate (1.4) has a second surface (1.42), which is arranged opposite the first surface (1.41), wherein no electronic components (1.21) are arranged on the second surface (1.42).

5. Scanning unit (1) according to one of the preceding claims, wherein the detector (1.1) is configured as at least one receiver winding (1.11).

6. Scanning unit (1) according to Claim 5, wherein the scanning unit (1) has at least one exciter winding (1.12), which is arranged on the first surface (1.41) of the substrate (1.4).

7. Scanning unit (1) according to one of the preceding claims, wherein the substrate (1.4) has at least one fixing element (1.43), which is arranged radially outside a sealing element (1.7).

8. Scanning unit (1) according to one of the preceding claims, wherein the substrate (1.4) has an edge region, which extends radially outside the potting compound (1.5).

9. Scanning unit (1) according to Claim 8, wherein the substrate (1.4) has at least one fixing element (1.43), which is arranged in the edge region.

10. Angle measuring device having a scanning unit (1) according to Claim 1 and an angular scale (2), wherein the angular scale (2) is arranged relative to the scanning unit (1) such that it can rotate about an axis of rotation (A), and a relative angular position between the scanning unit (1) and the angular scale (2) can be determined, wherein the scanning unit (1) is arranged with an axial offset relative to the angular scale (2).

11. Angle measuring device according to Claim 10, wherein the angular scale (2) is arranged radially within the potting compound (1.5).

12. Angle measuring device according to 10 or 11, wherein the angle measuring device is configured as an inductive angle measuring device.

13. Angle measuring device according to one of Claims 10 to 12, wherein the angular scale (2) has electrically conductive areas at periodic intervals as a graduation structure.

14. Angle measuring device according to one of Claims 10 to 13, wherein the angular scale (2) is produced from electrically conductive material and has elevations and depressions at periodic intervals as a graduation structure.

15. Angle measuring device according to one of Claims 10 to 14, wherein the angle measuring device is bearingless.

## Revendications

1. Unité de balayage (1) destinée à un dispositif de mesure d'angle pour balayer une échelle d'angles (2) de sorte qu'une position angulaire relative entre l'unité de balayage (1) et l'échelle d'angles (2) peut être déterminée autour d'un axe de rotation (A), l'unité de balayage (1) comprenant
- un substrat (1.4) qui comporte une première surface (1.41),
- au moins un détecteur (1.1) destiné à générer des signaux qui dépendent de la position angulaire,
- une électronique d'évaluation (1.2) qui comprend une pluralité de composants électroniques (1.21), les composants électroniques (1.21) de l'électronique d'évaluation (1.2) étant entourés d'une matière d'enrobage (1.5),
- une interface électrique (1.3) destinée à établir une liaison entre l'électronique d'évaluation (1.2) et l'électronique ultérieure,
l'au moins un détecteur (1.1), les composants électroniques (1.21) et l'interface électrique (1.3) étant disposés sur la première surface (1.41) du substrat (1.4),
les composants électroniques (1.21) et l'interface électrique (1.3) étant disposés de manière à être placés plus loin de l'axe de rotation (A) que l'au moins un détecteur (1.1), et
la matière d'enrobage (1.5) étant disposée par rapport à l'axe de rotation (A) circonférentiellement sur la première surface (1.41) du substrat (1.4).

2. Unité de balayage (1) selon la revendication 1, le substrat (1.4) ayant une épaisseur (D) d'au moins 0,5 mm.

3. Unité de balayage (1) selon la revendication 2, le substrat (1.4) comportant une couche métallique (1.44), la couche métallique (1.44) ayant une épaisseur (d) d'au moins 0,5 mm.

4. Unité de balayage (1) selon l'une des revendications précédentes, le substrat (1.4) comportant une deuxième surface (1.42) qui est disposée en face de la première surface (1.41), aucun composant électronique (1.21) n'étant disposé sur la deuxième surface (1.42).

5. Unité de balayage (1) selon l'une des revendications précédentes, le détecteur (1.1) étant réalisé sous la forme d'au moins un enroulement récepteur (1.11).

6. Unité de balayage (1) selon la revendication 5, l'unité de balayage (1) comportant au moins un enroulement d'excitation (1.12) qui est disposé sur la première surface (1.41) du substrat (1.4).

7. Unité de balayage (1) selon l'une des revendications précédentes, le substrat (1.4) comportant au moins un élément de fixation (1.43) qui est disposé radialement à l'extérieur d'un élément d'étanchéité (1.7).

8. Unité de balayage (1) selon l'une des revendications précédentes, le substrat (1.4) comportant une région de bord qui s'étend radialement à l'extérieur de la matière d'enrobage (1.5).

9. Unité de balayage (1) selon la revendication 8, le substrat (1.4) comportant au moins un élément de fixation (1.43) qui est disposé dans la région de bord.

10. Dispositif de mesure d'angle comprenant une unité de balayage (1) selon la revendication 1 et une échelle d'angles (2), l'échelle d'angles (2) étant disposée par rapport à l'unité de balayage (1) de manière à pouvoir tourner sur un axe de rotation (A) et une position angulaire relative pouvant être déterminée entre l'unité de balayage (1) et l'échelle d'angles (2), l'unité de balayage (1) étant disposée avec un décalage axial par rapport à l'échelle d'angles (2).

11. Dispositif de mesure d'angle selon la revendication 10, l'échelle d'angles (2) étant disposée radialement à l'intérieur de la matière d'enrobage (1.5).

12. Dispositif de mesure d'angle selon la revendication 10 ou 11, le dispositif de mesure d'angle étant conçu comme un dispositif de mesure d'angle inductif.

13. Dispositif de mesure d'angle selon l'une des revendications 10 à 12, l'échelle d'angles (2) comportant à intervalles périodiques des surfaces électriquement conductrices comme structure de graduation.

14. Dispositif de mesure d'angle selon l'une des revendications 10 à 13, l'échelle d'angles (2) étant en matériau électriquement conducteur et comportant à intervalles périodiques des élévations et des dépressions comme structure de graduation.

15. Dispositif de mesure d'angle selon l'une des revendications 10 à 14, le dispositif de mesure d'angle étant conçu sans paliers.
